# EUROPEAN PATENT APPLICATION

(11) **EP 3 900 525 A1**
(43) Date of publication of application: **27.10.2021**
(21) Application number: 19898828.9
(22) Date of filing: 09.05.2019
(51) Int. Cl.: A01K 1/03, B44C 5/00

(54) **NEW PET HOUSE**

(30) Priority: 17.12.2018 CN 201811543609
(71) Applicant: Xiamen Sunnypet Products Co., Ltd., Xiamen, Fujian 361006 (CN)
(72) Inventor: SCHUMANN, Dirk Ralf, 48167 Münster (DE)
(74) Representative: Wächter, Jochen
(86) International application number: PCT/CN2019/086217
(87) International publication number: WO 2020/124932

(57) **Abstract**

The pet house comprises at least two blade unit bodies, wherein each blade unit body is bent in an arc shape and has a first connection end and a second connection end, which partially overlap each other to give an arc-shaped enclosing wall with a through hole. All arc-shaped enclosing walls are arranged at intervals along the same circumferential surface to form a house body, and the first connection ends and the second connection ends of all blade unit bodies are detachably fixed at respective overlapping positions by means of connection members. The pet house is not only simple in components, convenient in packaging for transportation, but also easy to assemble and innovative in structure, giving consumers an eye-pleasing feel. When not in use, it can be disassembled and stored, and can also be hung to impart a certain decorative effect to the home.

## Description

### Technical Field

The present invention relates to the field of pet appliances, and more specifically to pet houses.

### Background of the Invention

With the improvement of the quality of people's life, due to their role in helping people get rid of their loneliness and meet their needs of spiritual life by means of entertainment, etc., family pets are increasingly popular, and pets have become important members of families. Therefore, pet owners usually prepare houses for their pets to rest. Currently, there are many types of pet houses, such as cage structures made of iron wires, small huts made of wood, but such kind of pet houses feature complexity in structure, high production cost, and are inconvenient to move and not satisfactory aesthetically.

Chinese utility model CN 203723219U discloses a pet house, which includes a house body integrally formed with flexible material inner core. The house body includes a house bottom and an enclosure surrounding the bottom, the inner core is covered with a casing, and inside the house body there is a detachable house pad that matches the shape of the house bottom. The structure of the pet house is simple, providing a private, comfortable resting place for pets, with good warmth retention, and is convenient for cleaning the pet house. However, when the pet house is not in use, it still occupies a significant space, and the structure of the house body is relatively mediocre, not aesthetically satisfactory.

### Summary of the Invention

This invention provides a new pet house to address the shortcomings of existing pet houses, which may be mediocre in structure, may not be aesthetically satisfactory, and may occupy a significant space while not in use.

The invention employs the following technical solution:
The new pet house is characterized by the following features: it comprises at least two blade unit bodies, each blade unit body is bent in an arc-shape and features a first connection end and a second connection end, which partially overlap each other to give an arc-shaped enclosing wall with a through hole; and all the arc-shaped enclosing walls are arranged at intervals along the same circumferential surface to form a house body, and the first connection ends and the second connection ends of all blade unit bodies are detachably fixed at the overlapping positions by means of connection members.

Ideally, the said blade unit body is made of elastic and bendable material, and the said blade unit body is in any one or more of U-shape, wavy shape, arc shape and long strip shape.

Further, the through holes of adjacent arc-shaped enclosing walls are arranged at intervals to form a spiral or approximately spiral house body.

Further, the two adjacent arc-shaped enclosing walls interpenetrated with each other are detachably connected.

The pet house is composed of three U-shaped blade unit bodies, the two vertical side walls on both sides of the said U-shaped blade unit bodes respectively form the first connection end and the second connection end, and the terminal of the first connection end and the terminal of the second connection end are fixed by a connection member.

Further, two first connection ends and/or second connection ends on different ones of the aforementioned blade unit bodies form a pet doorway.

Further, the first connection end and/or the second connection end on both sides of the upper part of the pet doorway are provided with mating connection buckles.

Further, the connection member is any one of a connection buckle, a connection strip, glue, and a connection rod.

Further, the house bottom is provided with a pet pad.

Further, the inner wall of each blade unit body is provided with an inner interlayer made of soft material.

This invention also provides another new pet house, it includes a single blade unit body, which is provided with a first connection end and a second connection end and is bent in an arc-shape to form a house body, and the first connection end and the second are connected detachably.

From the above description of the structure of this invention, it can be seen that compared with the prior art, this invention features the following advantages:
1. The new pet house of this invention features two or more blade unit bodies bent to form a house body structure, and the first connection ends and the second connection ends of all the blade unit bodies are fixed by connection members. The pet house is not only simple in components, convenient in packaging for transportation, but also easy to assemble and innovative in structure, giving consumers an eye-pleasing feel. When not in use, it can be disassembled and stored, and can also be hung to impart a certain decorative effect to the home.

2. For the pet house of this invention, when the first connection end and the second connection end of the blade unit body are connected by a connection buckle or a connection rod, the curvature of each blade unit body can be adjusted according to the need, and then the size of the whole house body can be adjusted.

### Description of the Drawings

Fig. 1 is a schematic structural drawing of a blade unit body in embodiment I of the invention.
Fig. 2 is a schematic drawing of the structure of a pet house composed of three blade unit bodies in embodiment I of the invention.
Fig. 3 is a schematic structural drawing of a blade unit body in embodiment II of the invention.
Fig. 4 is a schematic drawing of the structure of a pet house composed of three blade unit bodies in embodiment II of the invention.
Fig. 5 is a schematic structural drawing of a blade unit body in embodiment III of the invention.
Fig. 6 is a schematic drawing of the structure of a pet house composed of three blade unit bodies in embodiment III of the invention.
Fig. 7 is a schematic structural drawing of a blade unit body in embodiment IV of the invention.
Fig. 8 is a schematic drawing of the structure of a pet house composed of three blade unit bodies in embodiment IV of the invention.
Fig. 9 is a schematic structural drawing of a blade unit body in embodiment V of the invention.
Fig. 10 is a schematic drawing of the structure of a pet house composed of three blade unit bodies in embodiment V of the invention.

### Specific Embodiments

The specific embodiments are described below with reference to the attached drawings. In order to fully understand the invention, many details are described below, but for those skilled in the art, the invention can be realized without these details. Commonly known components, methods, and processes are not described in detail below.

### Embodiment I

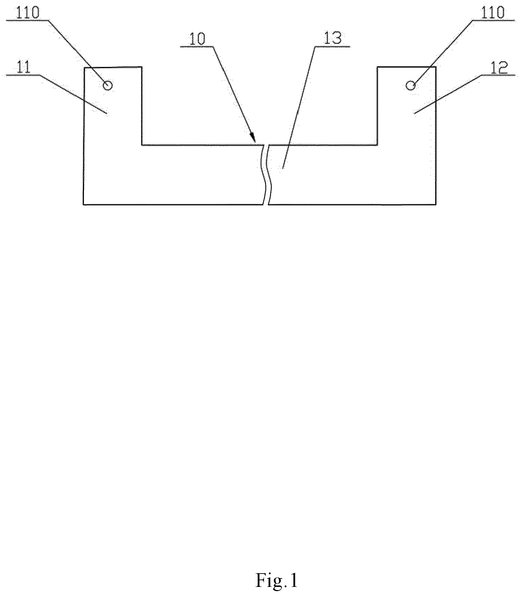

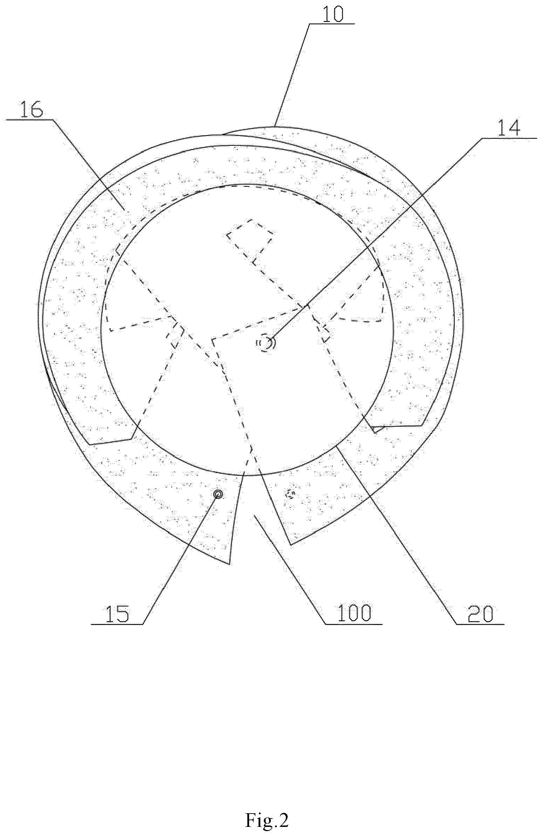

Refer to Fig. 1 and Fig. 2, the new pet house comprises three blade unit bodies 10, which are made of elastic and bendable materials. Each blade unit body 10 in this embodiment features a U-shaped structure and includes a first connection arm 11 and a second connection arm 12 on both sides, and connection bar 13 connecting the two connection arms. Both of the two connection arms in the embodiment are perpendicular to connection bar 13, and the first connection arm 11 and the second connection arm 12 respectively form the first connection end and the second connection end of the blade unit body. A connecting hole 110 is respectively provided on the first connection end and the second connection end of each blade unit body 10, which is curved to form an arc-shaped enclosing wall with a through hole, and the first connection end and the second connection end cross to make the two connecting holes 110 coincide.

Referring to Fig.1 and Fig. 2, the through holes of the three arc-shaped enclosing walls are interpenetrated with each other to form an approximate spiral-shaped house body, and the connecting holes 110 between the first connection ends and the second connection ends of all blade unit bodies 10 are fixed at the bottom of the house body by connection members 14.

Connection member 14 shown in this embodiment is of a button-type structure. The connection member 14 of the button-type structure is not only convenient to detach and fix, but also the first connection end and the second connection end of each blade unit body can be rotated around the connection member to adjust the size of the house body.

Referring to Fig. 2, the two first connection ends and/or second connection ends on different ones of the blade unit bodies 10 form a pet doorway 100, and the first connection end and/or the second connection end on both sides of the upper part of the pet house can also be provided with mating connection buckles 15 so that the pet doorway can be open or closed.

Also referring to Fig. 2, the inner wall of each blade unit body 10 is provided with an inner interlayer 16 made of soft material, and a pet pad 20 is also provided at the bottom of the aforementioned house body.

### Embodiment II

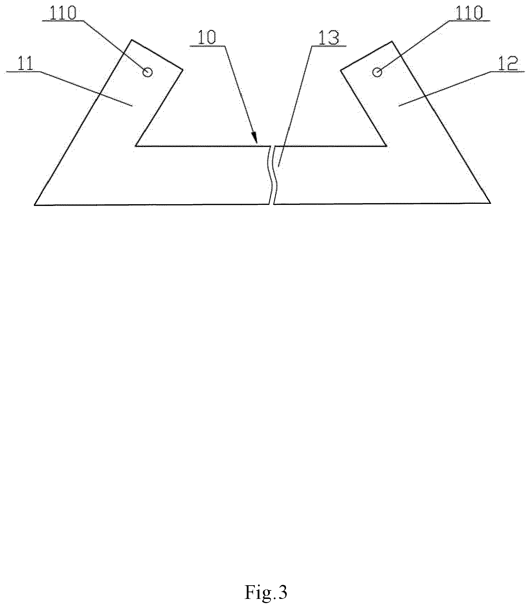

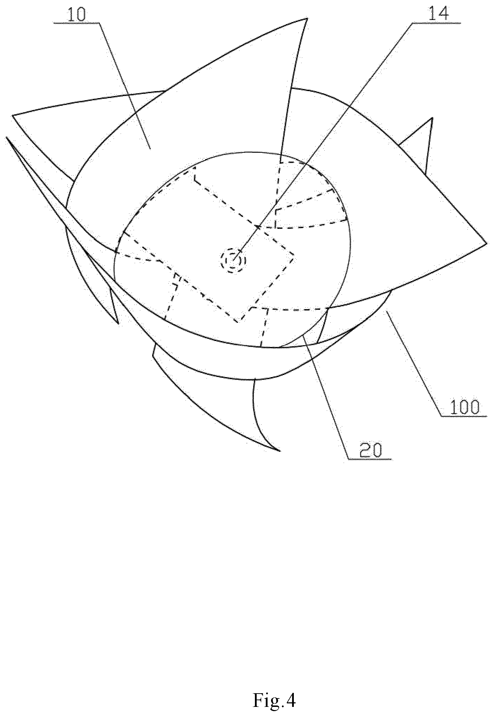

Referring to Fig. 3 and Fig. 4, the new pet house in this embodiment comprises three blade unit bodies 10, which also feature a U-shaped structure and include a first connection arm 11 and a second connection arm 12 on both sides, and a connection bar 13 connecting the two connection arms. The main difference between this embodiment and embodiment I is that the first connection arm 11 and the second connection arm 12 form an acute angled structure respectively with the connection bar 13, and the first connection arm 11 and the second connection arm 12 form the first connection end and the second connection end of the blade unit body respectively. A connecting hole 110 is provided on the first connection end and the second connection end of each blade unit body 10, which is curved to form an arc-shaped enclosing wall with a through hole, and the first connection end and the second connection end cross so that the two connection holes 110 coincide.

Referring to Fig. 3 and Fig. 4, the through holes of the three arc-shaped enclosing walls are interpenetrated with each other to form an approximate spiral shaped house body, and the connecting holes 110 between the first connection ends and the second connection ends of all blade unit bodies 10 are fixed at the bottom of the house body by connection members 14. The connection members 14 shown in this embodiment feature a button-type structure.

Referring to Fig. 4, two first connection ends and/or second connection ends on different ones of the aforementioned blade unit bodies 10 form the pet doorway 100, and the bottom of the aforementioned house body is also provided with a pet pad 20.

In this embodiment, the two connection arms of the blade unit body 10 and the connection bar form two acute-angled structures, and the house body structure formed by the multiple blade unit bodies 10 has multiple edges and corners. This embodiment is more suitable for consumers who pursue individuality.

### Embodiment III

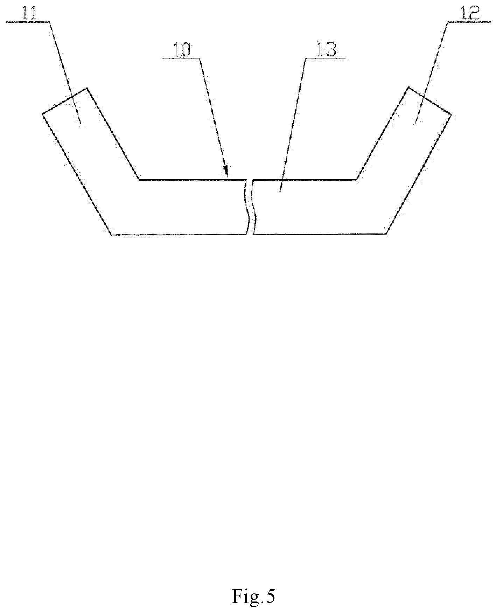

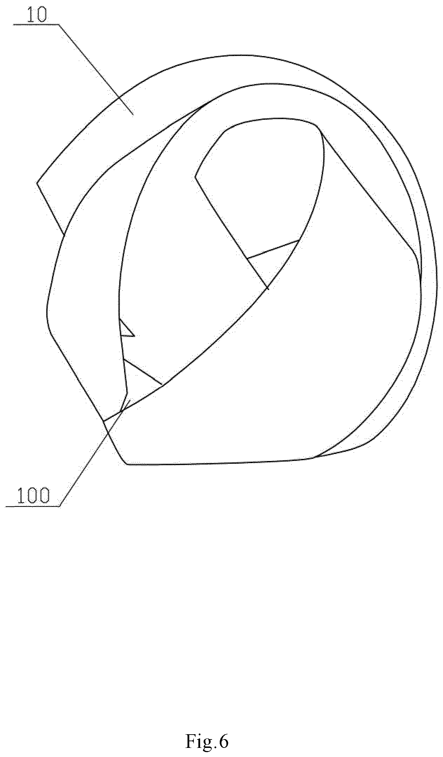

Referring to Fig. 5 and Fig. 6, the new pet house in this embodiment comprises three blade unit bodies 10, which also feature a U-shaped structure and include a first connection arm 11, a second connection arm 12 on both sides and a connection bar 13 connecting the two connection arms. The main difference between this embodiment and embodiments I and II is that the first connection arm 11 and the second connection arm 12 form an obtuse-angled structure respectively with the connection bar 13, and the first connection arm 11 and the second connection arm 12 form the first connection end and the second connection end of the blade unit body respectively. Each blade unit body 10 is curved to form an arc-shaped enclosing wall with a through hole, and the first connection end and the second connection end overlap at the intersecting portion.

Referring to Fig. 6, the through holes of the three arc-shaped enclosing walls are interpenetrated with each other to form an approximate spiral shaped house body, and the first connection ends and the second connection ends of all blade unit bodies 10 are fixed by connection strips.

Further referring to Fig. 6, two first connection ends and/or second connection ends on different ones of the aforementioned blade unit bodies 10 form the pet doorway 100, and the bottom of the house body is also provided with a pet pad (not shown in the figure).

In this embodiment, the shape of the house body formed by the blade unit bodies is larger than those formed in the embodiments I and II, and the opening at the top is smaller.

### Embodiment IV

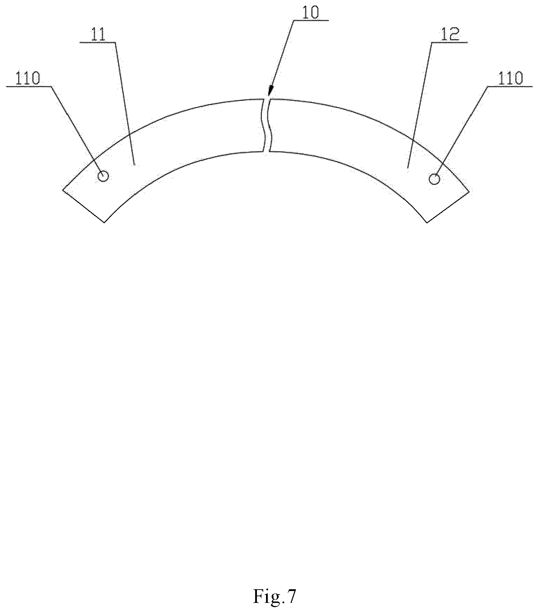

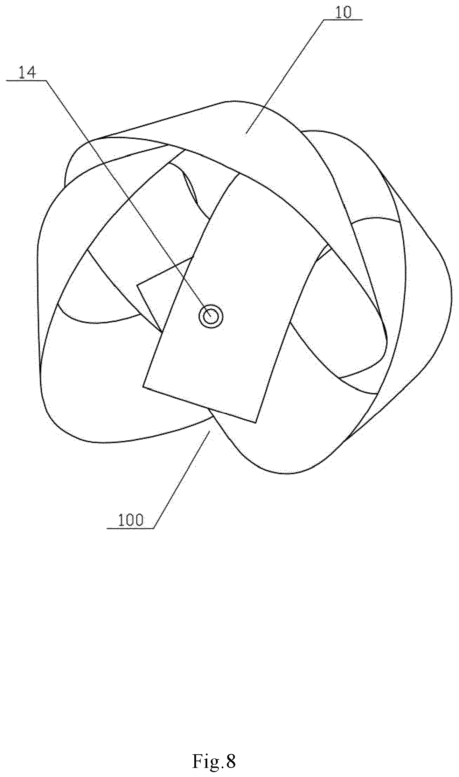

Referring to Fig. 7 and Fig. 8, the new pet house in this embodiment comprises three blade unit bodies 10 featuring an arc-shaped structure, and the two ends of each blade unit body 10 respectively form the first connection end 11 and the second connection end 12. A connecting hole 110 is respectively provided on the first connection end and the second connection end of each blade unit body 10, which is curved to form an arc-shaped enclosing wall with a through hole, and the first connection end and the second connection end cross to make the two connecting holes 110 coincide.

Referring to Fig. 8, the through holes of the three arc-shaped enclosing walls are interpenetrated with each other to form an approximate spiral shaped house body, and the connecting holes 110 between the first connection ends and the second connection ends of all blade unit bodies 10 are fixed at the bottom of the house body by connection members 14. The connection members 14 shown in this embodiment feature a button-type structure.

Referring to Fig. 8, the two first connection ends and/or second connection ends on different ones of the blade unit bodies 10 form a pet doorway 100, and the bottom of the house body is also provided with a pet pad (not shown in the figure).

### Embodiment V

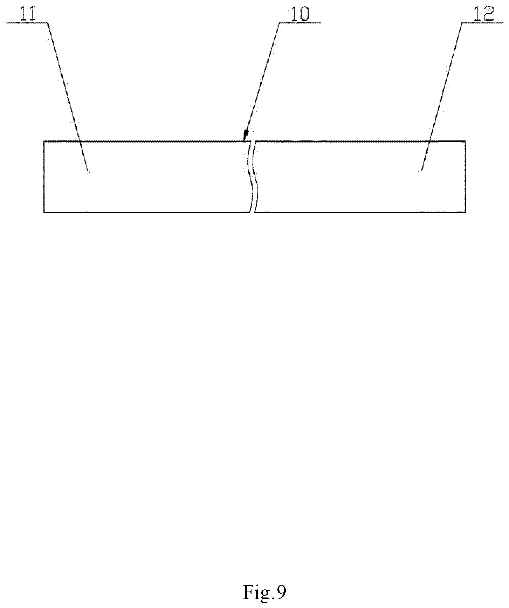

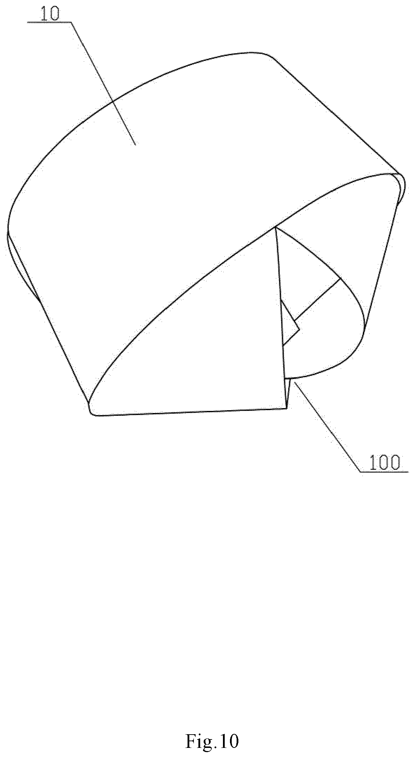

Referring to Fig. 9 and Fig. 10, the new pet house in this embodiment comprises three blade unit bodies 10, which feature a long strip-shaped structure. The two ends of each blade unit body 10 respectively form a first connection end 11 and a second connection end 12, each blade unit body 10 is curved to form an arc-shaped enclosing wall with a through hole, and the first connection end 11 and the second connection end 12 overlap partially.

Referring to Fig. 9 and Fig. 10, the through holes of the three arc-shaped enclosing walls are interpenetrated with each other to form an approximate spiral shaped house body, and the first connection ends 11 and the second connection ends 12 of all blade unit bodies 10 are fixed by connection strips.

Referring to Fig. 10, the two first connection ends and/or second connection ends on different ones of the blade unit bodies 10 form a pet doorway 100, and the bottom of the house body is also provided with a pet pad (not shown in the figure).

### Embodiment VI

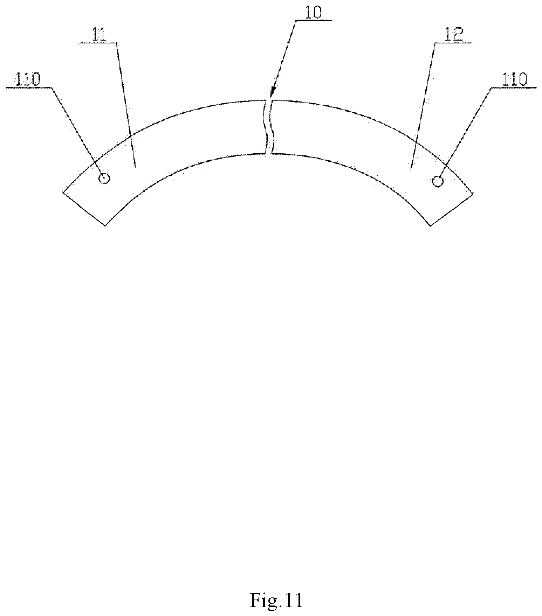

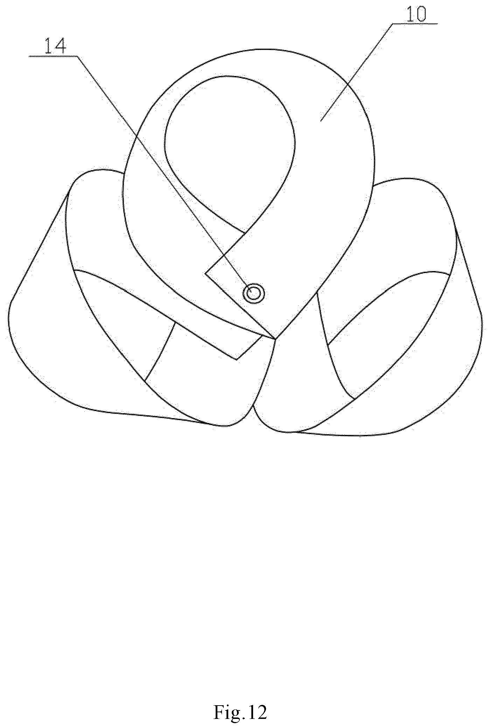

Referring to Fig. 11 and Fig. 12, the new pet house in this embodiment comprises three blade unit bodies 10 featuring an arc-shaped structure, and the two ends of each blade unit body 10 respectively form the first connection end 11 and the second connection end 12. A connecting hole 110 is respectively provided on the first connection end and the second connection end of each blade unit body 10, which is curved to form an arc-shaped enclosing wall with a through hole, and the first connection end 11 and the second connection end 12 cross to make the two connecting holes 110 coincide.

The main difference between this embodiment and embodiment IV lies in the arrangement of the three blade unit bodies 10, all the arc-shaped enclosing walls in this embodiment are arranged at intervals along the same circumferential surface, and the through holes of the three arc-shaped enclosing walls are not interpenetrated. The house body formed in this embodiment features approximately a petal-like structure. The connecting holes 110 between the first connection ends and the second connection ends of all blade unit bodies 10 are fixed at the bottom of the house body by connection members 14. The connection members 14 shown in this embodiment feature a button-type structure.

### Embodiment VII

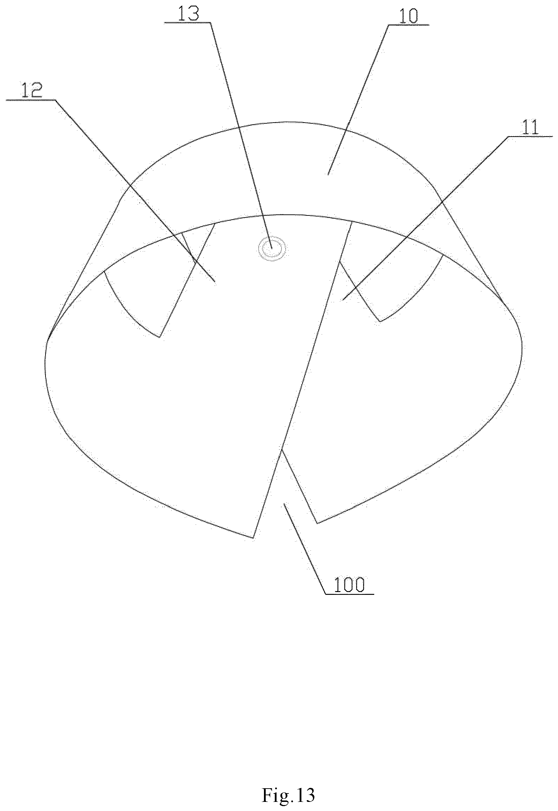

Referring to Fig. 13, the new pet house in this embodiment comprises a blade unit body 10 featuring a U-shaped structure, the blade unit body features a first connection end 11 and a second connection end 12, and the said blade unit body 10 is curved to form an arc-shaped house body. The said first connection end 11 and the second connection end 12 are detachably connected by a button 13, and a pet doorway 100 is formed between the first connection end 11 and the second connection end 12.

The above seven embodiments show a house structure composed of one or three identical blade unit bodies, but embodiments of this invention are not limited to these, and the house body can also be composed of two or more than three blade unit bodies. The three blade unit bodies of each pet house are not necessarily to be composed of three identical blade unit bodies, and can also be any combination of different shapes, as long as they can form a spiral or approximately spiral house body.

In addition, the connection member between the first connection end and the second connection end of the blade unit body can be a connecting buckle or a connection rod in addition to the connection strip and button-type structure shown in the above embodiment.

The above are only specific embodiment modes of this invention, but the design concept of this invention is not limited to these, and any immaterial modification of this invention using this concept shall be deemed as an infringement of the protection scope of this invention.

## Claims

1. A pet house comprising:
at least two blade unit bodies, wherein each blade unit body is bent in an arc shape and has a first connection end and a second connection end, which partially overlap each other to form an arc-shaped enclosing wall with a through hole; wherein all arc-shaped enclosing walls are arranged at intervals along the same circumferential surface to form a house body, wherein the first connection ends and the second connection ends of all blade unit bodies are detachably fixed at the overlapping positions by means of connection members.

2. The pet house according to claim 1 wherein each blade unit body is made of elastic and bendable material, and each blade unit body is in any one or more of U-shape, wavy shape, arc shape and long strip shape.

3. The pet house according to claim 1 wherein the through holes of adjacent arc-shaped enclosing walls are arranged at intervals to form a spiral or approximately spiral house body.

4. The pet house according to claim 3 wherein the two adjacent arc-shaped enclosing walls interpenetrated with each other are detachably connected.

5. The pet house according to claim 3 wherein the new pet house is composed of three U-shaped blade unit bodies, wherein the two vertical side walls on both sides of the U-shaped blade unit bodies respectively form the first connection end and the second connection end, and the terminal of the first connection end and the terminal of the second connection end are fixed by a connection member.

6. The pet house according to claim 1 wherein the two first connection ends and/or second connection ends on different ones of the blade unit bodies form a pet doorway.

7. The pet house according to claim 6 wherein the first connection end and/or the second connection end on both sides of the upper part of the pet doorway are provided with mating connection buckles.

8. The pet house according to claim 1 wherein the connection member is any one of a connection buckle, a connection strip, and a connecting rod.

9. The pet house according to claim 1 wherein the bottom of the house body is provided with a pet pad.

10. The pet house according to claim 1 wherein the inner wall of each blade unit body is provided with an inner interlayer made of soft material.

11. A pet house comprising a blade unit body, which has a first connection end and a second connection end and is bent in an arc-shape to form a house body, wherein the first connection end and the second connection end are detachably connected.
